# DEMANDE DE BREVET EUROPEEN

(11) **EP 3 925 755 A1**
(43) Date de publication de la demande: **22.12.2021**
(21) Numéro de dépôt: 21179607.3
(22) Date de dépôt: 15.06.2021
(51) Int. Cl.: B29C 43/20, B32B 5/02, B32B 5/18, B60R 13/08, B29C 44/08, B29C 44/12, B32B 5/24, B32B 7/04, B32B 27/06, B32B 27/08, B32B 27/12, D04H 1/542, D04H 13/00

(54) **PANNEAU INSONORISANT DE GARNISSAGE INTÉRIEUR DE VÉHICULE AUTOMOBILE**

(30) Priorité: 15.06.2020 FR 2006210
(71) Demandeur: TREVES PRODUCTS, SERVICES & INNOVATION, 75008 Paris (FR)
(72) Inventeur: DUVAL, Arnaud, 75008 Paris (FR); LEMAIRE, Dominique, 75008 Paris (FR); CRIGNON, Guillaume, 7508 Paris (FR)
(74) Mandataire: Sayettat, Julien Christian

(57) **Abrégé**

L'invention concerne un panneau (1) insonorisant de garnissage intérieur de véhicule automobile comprenant une couche inférieure (2), élastiquement compressible formant le ressort d'un système d'isolation de type « masse-ressort », et une couche supérieure (3) formant la masse dudit système, ladite couche inférieure : étant à base d'un mélange de flocons (4) de mousse élastiquement compressible, mélangés à des fibres liantes (5), lesdites fibres comprenant une âme (6), infusible ou fusible à température élevée, et une gaine (7) fusible à température modérée, lesdits flocons étant liés entre eux par fusion de ladite gaine, lesdits flocons occupant entre 80% et 90% en poids de ladite couche, de sorte que lesdites fibres occupent entre 20% et 10% en poids de ladite couche ; présentant une épaisseur généralement inférieure à 6 mm, une masse volumique supérieure à 150 kg/m³ et un module de Young en compression inférieur à 150 kPa.

## Description

L'invention concerne un panneau insonorisant de garnissage de véhicule automobile, ainsi qu'un procédé de réalisation d'un tel panneau.

Il est connu de réaliser un panneau insonorisant de garnissage intérieur - notamment dans l'habitacle ou dans le compartiment à moteur - de véhicule comprenant une couche inférieure, élastiquement compressible formant le ressort d'un système d'isolation de type « masse-ressort », et une couche supérieure formant la masse dudit système.

La couche inférieure est notamment à base de mousse ou de feutre et peut présenter généralement une épaisseur pouvant varier de 10 à 50 mm, une telle épaisseur étant requise pour que ladite couche présente des caractéristiques de ressort appropriées.

Cependant, une telle épaisseur peut s'avérer incompatible avec les contraintes géométriques imposées par l'architecture du véhicule.

On pourrait envisager une réduction drastique de cette épaisseur, par exemple en la portant à 5 mm.

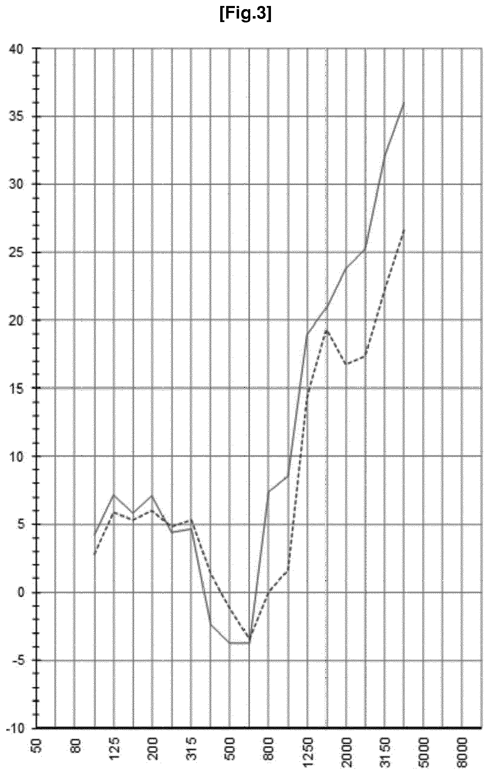

Cependant, comme on le verra dans un exemple décrit plus loin (voir la figure 3), l'utilisation d'une couche inférieure en mousse moulée injectée de 5 mm présente l'inconvénient de découpler à des fréquences élevées du fait de sa faible épaisseur et de l'augmentation drastique de son module de Young, ce qui détruit les propriétés de découplage du ressort et dégrade fortement les performances d'isolation acoustique.

On pourrait envisager comme autre solution d'augmenter de façon très importante la masse surfacique de la couche supérieure, en lui conférant par exemple une masse surfacique supérieure à 5 kg/m², mais une telle façon de procéder est incompatible avec les contraintes d'allègement des véhicules.

C'est pourquoi l'invention a pour but de proposer un panneau présentant une couche inférieure de faible épaisseur et présentant néanmoins de bonnes propriétés de ressort.

A cet effet, et selon un premier aspect, l'invention propose un panneau insonorisant de garnissage intérieur de véhicule automobile comprenant une couche inférieure, élastiquement compressible formant le ressort d'un système d'isolation de type « masse-ressort », et une couche supérieure formant la masse dudit système, sachant que ladite couche inférieure :
- est à base d'un mélange de flocons de mousse élastiquement compressible, mélangés à des fibres liantes, lesdites fibres comprenant une âme, infusible ou fusible à température élevée, et une gaine fusible à température modérée, lesdits flocons étant liés entre eux par fusion de ladite gaine, de sorte que ladite couche soit sous forme de mousse agglomérée, lesdits flocons occupant entre 80% et 90% en poids de ladite couche, de sorte que lesdites fibres occupent entre 20% et 10% en poids de ladite couche,
- présente généralement une épaisseur inférieure à 6 mm, une masse volumique supérieure à 150 kg/m³ et un module de Young en compression inférieur à 150 kPa.

Comme on le verra plus loin, quand on parle d'épaisseur de couche inférieure généralement inférieure à 6 mm, avec la masse volumique et le module de Young tels que définis ci-dessus, cela n'exclut pas le fait que ladite couche puisse prendre de façon très localisée, notamment sur moins de 10% de sa surface, une épaisseur supérieure à 6 mm.

Le maintien d'un module de Young aussi bas pour une telle masse volumique est tout à fait exceptionnel et inattendu.

Et la figure 3 montre que les performances d'isolation acoustique du panneau selon l'invention sont extrêmement satisfaisantes malgré la très faible épaisseur de la couche inférieure, et ceci en utilisant une couche supérieure de masse surfacique tout à fait modérée.

Selon un autre aspect, l'invention propose un procédé de réalisation d'un tel panneau.

D'autres particularités et avantages de l'invention apparaîtront dans la description qui suit, faite en référence aux figures jointes, dans lesquelles :
[Fig.1] est une vue schématique en coupe d'un panneau selon une réalisation, ledit panneau étant monté dans un véhicule,
[Fig.2] est une vue schématique en coupe d'une fibre liante,
[Fig.3] présente la mesure de l'isolation en « petite cabine » (« insertion loss » (perte par insertion) en fonction de la fréquence) :
   ∘ pour un panneau de référence, avec une couche inférieure en mousse de polyuréthanne souple moulée de densité égale à 58 kg/m³ (courbe 1 en pointillés),
   ∘ et pour un panneau selon une réalisation de l'invention, avec une couche inférieure à base de flocons de mousse et de fibres liantes présentant une masse volumique de 266 kg/m³, comprenant 85% en poids de flocons d'une taille de 15 +/- 5 mm et 15 % de fibres de titre 4,4 dtex (courbe 2 en trait plein),
les couches inférieures du panneau de référence et de celui selon l'invention présentant toutes les deux une épaisseur de 5 mm et étant pourvues d'une couche supérieure étanche de masse surfacique égale à 3,5 kg/m².

En référence aux figures, on décrit un panneau 1 insonorisant de garnissage intérieur de véhicule automobile comprenant une couche inférieure 2, élastiquement compressible formant le ressort d'un système d'isolation de type « masse-ressort », et une couche supérieure 3 formant la masse dudit système, sachant que ladite couche inférieure :
- est à base d'un mélange de flocons 4 de mousse élastiquement compressible, notamment issus de recyclage, mélangés à des fibres liantes 5, lesdites fibres comprenant une âme 6, infusible ou fusible à température élevée, et une gaine 7 fusible à température modérée, lesdits flocons étant liés entre eux par fusion de ladite gaine, de sorte que ladite couche soit sous forme de mousse agglomérée, lesdits flocons occupant entre 80% et 90% en poids de ladite couche, de sorte que lesdites fibres occupent entre 20% et 10% en poids de ladite couche,
- présente généralement une épaisseur inférieure à 6 mm, une masse volumique supérieure à 150 kg/m³ et un module de Young en compression inférieur à 150 kPa.

En particulier, la couche inférieure 2 présente une épaisseur inférieure à 6 mm sur au moins 90% de sa surface.

Plus particulièrement, les flocons 4 occupent entre 83% et 87% en poids de la couche inférieure 2, et notamment de l'ordre de 85%, de sorte que les fibres 5 occupent entre 17% et 13% en poids de ladite couche, et notamment de l'ordre de 15%,

Selon une réalisation, les flocons 4 sont à base de polyuréthanne.

Selon une réalisation, au moins 90 % des flocons 4 présentent une taille comprise entre 10 et 20 mm.

Selon une réalisation, l'âme 6 est à base de polyester et la gaine 7 à base de co-polyester.

Selon une réalisation, les fibres 5 ont un titre compris entre 1,7 et 6,7 dtex, étant notamment de l'ordre de 4,4 dtex.

L'utilisation de fibres 5 relativement fines favorise l'absorption par dissipation visco-thermique, ce qui a un rôle favorable sur l'efficacité d'un ressort poreux.

Selon une réalisation, la couche supérieure 3 présente généralement - notamment sur au moins 95% de sa surface - une masse surfacique comprise entre 1000 et 4000 g/m².

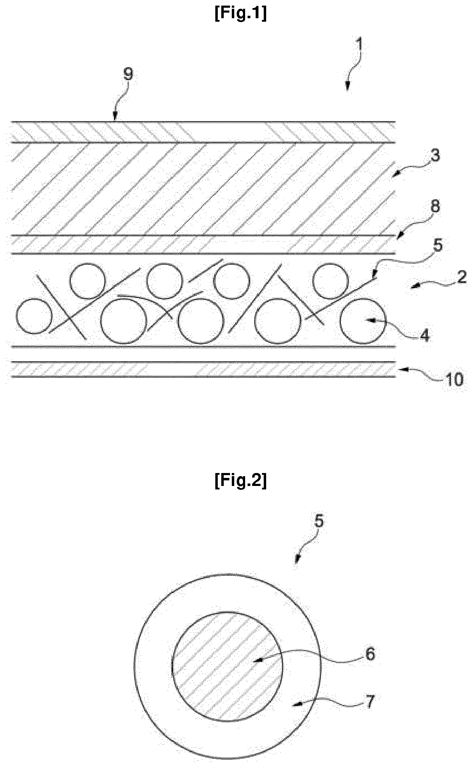

Selon la réalisation représentée en figure 1, la couche supérieure 3 est poreuse, ladite couche étant associée à une couche d'étanchéité 8 disposée entre ladite couche supérieure et la couche inférieure 2, de sorte que ledit panneau forme un système isolant, de type « masse-ressort », et absorbant de par la porosité de ladite couche supérieure.

La couche d'étanchéité 8 est par exemple sous la forme d'un film thermoplastique ou d'un non tissé enduit étanche, notamment d'épaisseur inférieure à 200 microns.

Selon un mode de réalisation, la couche supérieure 3 poreuse est à base de flocons de mousse, notamment de polyuréthanne, liés entre eux par un liant, notamment sous la forme de fibres liantes telles que précédemment décrites.

Selon un autre mode de réalisation, la couche supérieure 3 poreuse est à base de fibres, liés entre elles par un liant, notamment sous la forme de fibres liantes telles que précédemment décrites.

Selon un mode de réalisation, la couche supérieure 3 poreuse peut être chargée de particules denses, par exemple à base d'élastomère thermoplastique chargé avec une charge minérale, afin d'augmenter sa masse surfacique pour améliorer l'isolation acoustique.

Selon une autre réalisation, non représentée, la couche supérieure 3 est étanche, ce qui permet de s'affranchir de la couche d'étanchéité 8 prévue dans la réalisation de la figure 1.

En particulier, la couche supérieure 3 est à base d'élastomère thermoplastique - notamment d'éthylène propylène diène monomère - pourvu d'une charge dispersée, notamment minérale - notamment à base de baryte ou de carbonate de calcium.

Selon un mode de réalisation, le module de Young de la couche supérieure 3, qu'elle soit étanche ou poreuse, est supérieur à 1 MPa.

Selon la réalisation représentée en figure 1, le panneau 1 est recouvert sur la couche supérieure 3 d'une couche de revêtement 9, par exemple à base de moquette ou de non tissé.

Une telle couche de revêtement 9 pourrait également être disposée sur une couche supérieure 3 étanche.

Selon une réalisation non représentée, la couche inférieure 2 peut être recouverte d'une couche de protection sur au moins une de ses faces, ladite couche permettant de faciliter la préchauffe avant conformation et aussi de protéger ladite couche inférieure lors de la manipulation du panneau 1, cette couche pouvant être de type « Spun » polyester de 20 à 30 g/m² ou de non tissé.

On commente à présent les courbes représentées en figure 3.

On observe un gain, à partir de 500 Hz environ, de presque 7 dB en moyenne entre les courbes d'isolation en faveur de la réalisation selon l'invention, ce qui est meilleur que ce qu'on aurait attendu de la « loi de masse » (gain de 6 dB pour un doublement de la masse surfacique de la paroi sur laquelle est posée le panneau 1 ou de celle de la couche supérieure 3).

On décrit à présent un procédé de réalisation d'un tel panneau 1, ledit procédé comprenant les étapes suivantes :
- prévoir un moule de thermo-compression,
- disposer une couche supérieure 3 dans ledit moule, ladite couche ayant été éventuellement conformée au préalable à la forme dudit moule - par exemple par moulage, thermoformage ou compression à chaud -,
- prévoir un matelas à base de flocons de mousse et de fibres liantes, lesdits flocons occupant entre 80% et 90% en poids dudit matelas,
- chauffer ledit matelas à température de fusion de la gaine desdites fibres liantes,
- disposer ledit matelas sur ladite couche supérieure,
- fermer ledit moule pour comprimer ledit matelas et obtenir une couche inférieure 2 s'associant à ladite couche supérieure, la compression étant réalisée de manière à conférer à ladite couche inférieure une épaisseur généralement inférieure à 6 mm correspondant à une masse volumique supérieure à 150 kg/m³,
- démouler l'ensemble obtenu et réaliser éventuellement des découpes pour obtenir ledit panneau.

Le procédé peut comprendre en outre, quand la couche supérieure 3 est poreuse, une étape de placement d'une couche d'étanchéité 8 entre ladite couche supérieure et le matelas à base de flocons de mousse et de fibres liantes.

On décrit enfin, en référence à la figure 1, un montage d'un panneau 1 comprenant ledit panneau et une paroi 10 de structure - par exemple de caisse ou de moteur - dudit véhicule, ledit panneau étant posé sur ladite paroi, la couche inférieure 2 étant tournée vers ladite paroi et présentant une forme épousant sensiblement celle de ladite paroi, ce qui permet de limiter fortement le rayonnement acoustique et d'améliorer ainsi les performances de protection acoustique dudit panneau.

## Revendications

1. Panneau (1) insonorisant de garnissage intérieur de véhicule automobile comprenant une couche inférieure (2), élastiquement compressible formant le ressort d'un système d'isolation de type « masse-ressort », et une couche supérieure (3) formant la masse dudit système, ledit panneau étant **caractérisé en ce que** ladite couche inférieure :
• est à base d'un mélange de flocons (4) de mousse élastiquement compressible, mélangés à des fibres liantes (5), lesdites fibres comprenant une âme (6), infusible ou fusible à température élevée, et une gaine (7) fusible à température modérée, lesdits flocons étant liés entre eux par fusion de ladite gaine, de sorte que ladite couche soit sous forme de mousse agglomérée, lesdits flocons occupant entre 80% et 90% en poids de ladite couche, de sorte que lesdites fibres occupent entre 20% et 10% en poids de ladite couche,
• présente une épaisseur généralement inférieure à 6 mm, une masse volumique supérieure à 150 kg/m³ et un module de Young en compression inférieur à 150 kPa.

2. Panneau selon la revendication 1, **caractérisé en ce que** les flocons (4) occupent entre 83% et 87% en poids de la couche inférieure (2), et notamment de l'ordre de 85%, de sorte que les fibres (5) occupent entre 17% et 13% en poids de ladite couche, et notamment de l'ordre de 15%,

3. Panneau selon l'une des revendications 1 ou 2, **caractérisé en ce que** les flocons (4) sont à base de polyuréthanne.

4. Panneau selon l'une quelconque des revendications 1 à 3, **caractérisé en ce qu'**au moins 90 % des flocons (4) présentent une taille comprise entre 10 et 20 mm.

5. Panneau selon l'une quelconque des revendications 1 à 4, **caractérisé en ce que** les fibres (5) ont un titre compris entre 1,7 et 6,7 dtex, étant notamment de l'ordre de 4,4 dtex.

6. Panneau selon l'une quelconque des revendications 1 à 5, **caractérisé en ce que** couche supérieure (3) est poreuse, ladite couche étant associée à une couche d'étanchéité (8) disposée entre ladite couche supérieure et la couche inférieure (2).

7. Panneau selon l'une quelconque des revendications 1 à 5, **caractérisé en ce que** la couche supérieure (3) est étanche.

8. Panneau selon la revendication 7, **caractérisé en ce que** la couche supérieure (3) est à base d'élastomère thermoplastique pourvu d'une charge dispersée.

9. Procédé de réalisation d'un panneau (1) selon l'une quelconque des revendications précédentes, ledit procédé comprenant les étapes suivantes :
• prévoir un moule de thermo-compression,
• disposer une couche supérieure (3) dans ledit moule, ladite couche ayant été éventuellement conformée au préalable à la forme dudit moule,
• prévoir un matelas à base de flocons de mousse et de fibres liantes, lesdits flocons occupant entre 80% et 90% en poids dudit matelas,
• chauffer ledit matelas à température de fusion de la gaine desdites fibres liantes,
• disposer ledit matelas sur ladite couche supérieure,
• fermer ledit moule pour comprimer ledit matelas et obtenir une couche inférieure (2) s'associant à ladite couche supérieure, la compression étant réalisée de manière à conférer à ladite couche inférieure une épaisseur généralement inférieure à 6 mm correspondant à une masse volumique supérieure à 150 kg/m³,
• démouler l'ensemble obtenu et réaliser éventuellement des découpes pour obtenir ledit panneau.

10. Procédé selon la revendication précédente, quand elle se rattache à la revendication 6, **caractérisé en ce qu'**il comprend en outre, quand la couche supérieure (3) est poreuse, une étape de placement d'une couche d'étanchéité (8) entre ladite couche supérieure et le matelas.
